# EUROPEAN PATENT APPLICATION

(11) **EP 3 617 559 A1**
(43) Date of publication of application: **04.03.2020**
(21) Application number: 19194094.9
(22) Date of filing: 28.08.2019
(51) Int. Cl.: F16H 59/02

(54) **GEARSHIFT LEVER DEVICE**

(30) Priority: 31.08.2018 JP 2018162601
(71) Applicant: Fuji Kiko Co., Ltd., Shizuoka 431-0431 (JP)
(72) Inventor: MATSUMOTO, Akio, Kosai-shi, Shizuoka 431-0431 (JP); TAKAHIRA, Tomohiro, Kosai-shi, Shizuoka 431-0431 (JP); KUBOTA, Katsushi, Kosai-shi, Shizuoka 431-0431 (JP); SATO, Yukihiro, Kosai-shi, Shizuoka 431-0431 (JP); HAKAMATA, Takumi, Kosai-shi, Shizuoka 431-0431 (JP)
(74) Representative: Grünecker Patent- und Rechtsanwälte PartG mbB

(57) **Abstract**

A gearshift lever device includes: a main body case fixed on a body of a vehicle; and a gearshift lever supported by the main body case in a shiftable manner. The gearshift lever includes a tubular lever pipe and a lever holder having an insertion hole through which the lever pipe is inserted. The lever pipe includes a lever pipe upper portion forming an upper side of the lever pipe and a lever pipe lower portion forming a lower side of the lever pipe. A section modulus of the lever pipe lower portion is greater than that of the lever pipe upper portion. A shape of the lever pipe is changed in a part below an upper end of the main body case and above an upper end of the lever holder such that the lever pipe upper portion and the lever pipe lower portion have different shapes.

## Description

### Technical Field

The present invention relates to a gearshift lever device.

### Background Art

There has been known a gearshift lever device including a gearshift lever that is operated to shift relative to a main body case by a driver for gear change (see Japanese Patent Application Publication No. H10-59000).

Some gearshift lever devices of this type include a main body case fixed on a body of a vehicle and a gearshift lever supported by the main body case in a shiftable manner. In such gearshift lever device, the gearshift lever includes a metallic lever pipe and a synthetic resin lever holder, and an insertion hole to which the lever pipe is inserted is formed in the lever holder.

### Summary

In the above-described gearshift lever device, when a predetermined amount or more of load (large load) is applied to the gearshift lever at the time of a vehicle collision or the like, the synthetic resin lever holder may not follow the deformation of the metallic lever pipe, and thus the lever pipe and the lever holder may be separated (detached) from each other.

In view of this, the object of the present invention is to provide a gearshift lever device that can suppress the separation between the lever pipe and the lever holder and improve the strength of the lever pipe in a shift direction.

A gearshift lever device according to an aspect of the present invention includes a main body case fixed on a body of a vehicle and a gearshift lever supported by the main body case in a shiftable manner. The gearshift lever includes a tubular lever pipe and a lever holder having an insertion hole through which the lever pipe is inserted. The lever pipe includes a lever pipe upper portion forming an upper side of the lever pipe and a lever pipe lower portion forming a lower side of the lever pipe. A section modulus of the lever pipe lower portion is greater than a section modulus of the lever pipe upper portion. A shape of the lever pipe is changed in a part below an upper end of the main body case and above an upper end of the lever holder such that the lever pipe upper portion and the lever pipe lower portion have different shapes.

According to a gearshift lever device of an aspect of the present invention, it is possible to provide a gearshift lever device that can suppress the separation between the lever pipe and the lever holder and improve the strength of the lever pipe in a shift direction.

### Brief Description of Drawings

Fig. 1 is an exploded perspective view of a gearshift lever device according to an embodiment of the present invention.
Fig. 2 is a perspective view of a gearshift lever.
Fig. 3A is a cross-sectional view taken along the A-A line in Fig. 2.
Fig. 3B is a cross-sectional view taken along the B-B line in Fig. 3A.
Fig. 3C is a cross-sectional view taken along the C-C line in Fig. 3A.

### Description of Embodiments

An embodiment of the present invention is described below in detail with reference to the drawings.

In the drawings, an arrow X indicates a select direction of a gearshift lever (vehicle right-left direction), an arrow Y indicates a shift direction of the gearshift lever (vehicle front-rear direction), and an arrow Z indicates an axial direction of the gearshift lever (vehicle top-down direction).

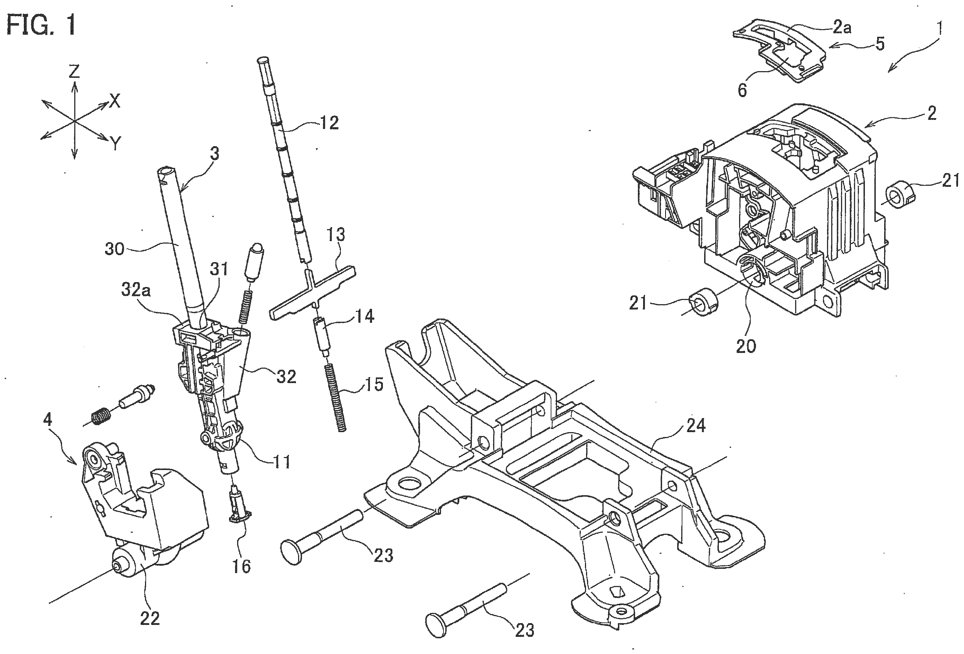

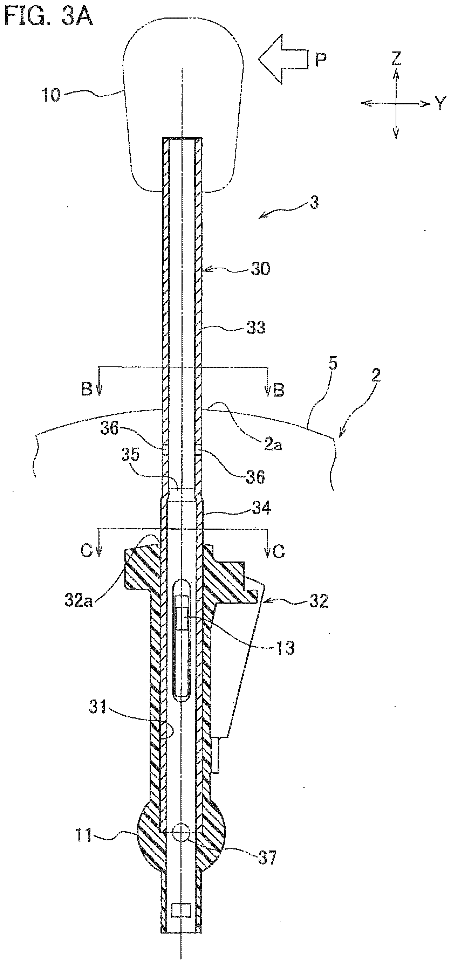

As illustrated in Fig. 1, the gearshift lever device 1 includes a main body case 2 fixed on a body (unillustrated) of the vehicle and a gearshift lever 3 and a select lever 4 that are supported by the main body case 2 in a shiftable manner (a swingable manner). The gearshift lever 3 includes an operation portion (knob) 10 formed on an upper end portion (see Fig. 3A) and a shaft support portion (spherical portion) 11 formed on a lower end portion. In the gearshift lever 3, a pushing rod 12, a position pin 13, an auxiliary rod 14, and a rod spring 15 are housed in this order from an upper end side of the gearshift lever 3, and a rod spring stopper 16 is attached on a lower end of the gearshift lever 3. On the other hand, the select lever 4 includes a holding portion (unillustrated) that holds the shaft support portion 11 of the gearshift lever 3.

The gearshift lever 3 is supported to be shiftable (swingable) relative to the main body case 2 in the select direction (vehicle right-left direction) X and is supported to be shiftable relative to the main body case 2 in the shift direction (vehicle front-rear direction) Y. On the other hand, the select lever 4 is supported to be shiftable relative to the main body case 2 only in the shift direction (vehicle front-rear direction) Y.

In the select direction X, an A (automatic) mode and an M (manual) mode are set, for example. For operation positions in the shift direction Y during the A mode (shift operation positions), a P (parking) position, an R (reverse) position, and an N (neutral) position, and a D (drive) position are set, for example. For operation positions in the shift direction Y during the M mode (select operation positions), a shift-up position and a shift-down position are set, for example.

An indicator 5 that shows the operation positions of the gearshift lever 3 is arranged on the top of the main body case 2, and a gate hole 6 corresponding to the operation positions of the gearshift lever 3 is formed in the indicator 5.

A bearing portion 20 is formed in a lower portion of the main body case 2, and a support shaft 22 of the select lever 4 is rotatably supported by the bearing portion 20 with bearing collars 21. A block body (base bracket) 24 is assembled on the lower portion of the main body case 2 with locating pins 23.

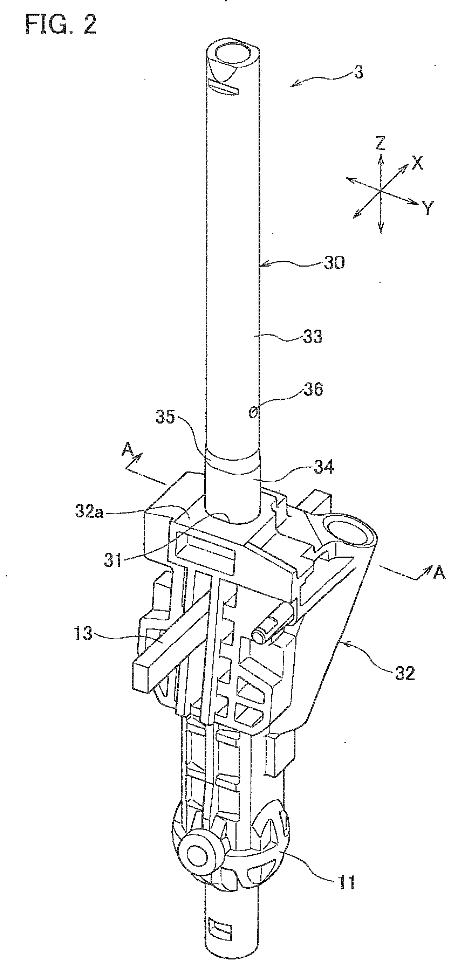

As illustrated in Figs. 2 and 3A, the gearshift lever 3 includes a tubular lever pipe (lever main body) 30 and a lever holder 32 having an insertion hole 31 through which the lever pipe 30 is inserted. The lever pipe 30 is made of metal, and the lever holder 32 is made of synthetic resin. The lever holder 32 may be formed by molding (to form a lever resin mold), and the lever pipe 30 may be pressed and fitted into the molded lever holder 32.

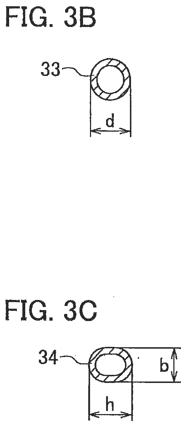

The lever pipe 30 includes a lever pipe upper portion 33 forming an upper side of the lever pipe 30 and a lever pipe lower portion 34 forming a lower side of the lever pipe 30. A section modulus of a cross section along the shift direction Y of the lever pipe lower portion 34 is greater than a section modulus of a cross section along the shift direction Y of the lever pipe upper portion 33 (see Figs. 3B and 3C).

Specifically, the lever pipe upper portion 33 is formed in a tube shape having a complete circle cross section (cylindrical tube shape), and the lever pipe lower portion 34 is formed in a tube shape having an oval cross section. A major axis direction of the oval of the lever pipe lower portion 34 is aligned with the shift direction Y of the gearshift lever 3. Namely, the lever pipe 30 is formed as a round pipe.

In this embodiment, the lever pipe lower portion 34 in the lever pipe 30 is formed by pressing the lower portion of the round pipe (lever pipe 30). Consequently, the lever pipe upper portion 33 and the lever pipe lower portion 34 have almost equal thicknesses (see Figs 3B and 3C). A major axis width h of the oval of the lever pipe lower portion 34 is greater than a diameter d of the complete circle of the lever pipe upper portion 33 (see Figs. 3B and 3C). The diameter d of the complete circle of the lever pipe upper portion 33 is greater than a minor axis width b of the oval of the lever pipe lower portion 34 (see Figs. 3B and 3C).

The lever pipe upper portion 33 may be formed in a tube shape having a square cross section (square tube shape), and the lever pipe lower portion 34 may be formed in a tube shape having a rectangular cross section. In this case, a longitudinal direction of the rectangle of the lever pipe lower portion 34 is aligned with the shift direction Y of the gearshift lever 3. Namely, the lever pipe 30 may be formed as a rectangular pipe.

The shape of the lever pipe 30 is changed in a part below an upper end 2a of the main body case 2 and above an upper end 32a of the lever holder 32 such that the lever pipe upper portion 33 and the lever pipe lower portion 34 have different shapes. Thus, the lever pipe 30 includes a shape change portion 35 which is formed in the part of the lever pipe 30 below the upper end 2a of the main body case 2 and above the upper end 32a of the lever holder 32, and across which the lever pipe upper portion 33 and the lever pipe lower portion 34 in the shape change portion 35 have the different shapes. In short, it is preferred to form the shape change portion 35 within a region in the lever pipe 30 that is invisible from the outside of the assembled gearshift lever device 1.

A through hole 36 as a flimsy portion is formed in a part of the lever pipe 30 below the upper end 2a of the main body case 2 (i.e., below the indicator 5) and above the upper end 32a of the lever holder 32. In this embodiment, the through hole 36 is formed in a part of the lever pipe 30 above the shape change portion 35. The through hole 36 as the flimsy portion is formed in the lever pipe 30 to concentrate stress to a desired part of the lever pipe 30 when a predetermined amount or more of load (large load) P is inputted; however, a notch or the like may be formed as the flimsy portion instead of the through hole 36.

In the gearshift lever device 1 with such a configuration, when the predetermined amount or more of load (large load) P is applied to the operation portion 10 of the gearshift lever 3 at the time of a vehicle collision and the like (see Fig. 3A), the position pin 13 hitting against the main body case 2 serves as a stopper. Consequently, when the large load P is inputted, the entire lever pipe 30 turns down with a lower end portion of the lever holder 32 acting as a pivot 37 (see Fig. 3A), and the maximum bending moment is generated in a part around the position pin 13 in the lever pipe 30.

If the lever pipe 30 has a constant cross section shape (section modulus) along the entire length, the synthetic resin lever holder 32 may not completely follow the deformation of the metallic lever pipe 30, and thus the lever pipe 30 and the lever holder 32 may be separated (detached) from each other. This is because stress is concentrated to a part of the lever pipe 30 covered by the lever holder 32 when the large load P is inputted.

In the gearshift lever device 1 according to this embodiment, the above-described shape change portion 35 is formed in the lever pipe 30. With such a configuration, stress can be concentrated to a part of the lever pipe 30 uncovered by the lever holder 32 (part around the shape change portion 35) when the large load P is inputted. This makes it possible to suppress the deformation of the lower portion of the lever pipe 30 (lever pipe lower portion 34) when the large load P is inputted, and thus the separation between the lever pipe 30 and the lever holder 32 can be suppressed.

Operations and effects of this embodiment are described below.
(1) The gearshift lever device 1 includes the main body case 2 fixed on the body of the vehicle and the gearshift lever 3 supported by the main body case 2 in a shiftable manner. The gearshift lever 3 includes the tubular lever pipe 30 and the lever holder 32 including the insertion hole 31 through which the lever pipe 30 is inserted. The lever pipe 30 includes the lever pipe upper portion 33 forming the upper side of the lever pipe 30 and the lever pipe lower portion 34 forming the lower side of the lever pipe 30. The section modulus of the lever pipe lower portion 34 is greater than the section modulus of the lever pipe upper portion 33. The shape of the lever pipe 30 is changed in the part of the lever pipe 30 below the upper end 2a of the main body case 2 and above the upper end 32a of the lever holder 32 such that the lever pipe upper portion 33 and the lever pipe lower portion 34 have different shapes.
   The shape change portion 35 is formed in the part of the lever pipe 30 below the upper end 2a of the main body case 2 and above the upper end 32a of the lever holder 32, and the lever pipe upper portion 33 and the lever pipe lower portion 34 have the different shapes across the shape change portion 35. Additionally, the section modulus of the cross section along the shift direction Y of the lever pipe lower portion 34 is greater than the section modulus of the cross section along the shift direction Y of the lever pipe upper portion 33. Such a configuration of the lever pipe 30 makes it possible to improve the stiffness of the lever pipe 30 in the shift direction (vehicle front-rear direction) Y, and thus the deformation of the lever pipe 30 can be suppressed.
   Moreover, with the above-described shape change portion 35 formed in the lever pipe 30, stress can be concentrated to the part of the lever pipe 30 around the shape change portion 35 when the predetermined amount or more of load (large load) P is inputted. This makes it possible to suppress the deformation of the lower part of the lever pipe 30 (lever pipe lower portion 34) when the large load P is inputted, and thus the separation between the lever pipe 30 and the lever holder 32 can be reliably suppressed.
   Furthermore, since the shape change portion 35 is provided in the part of the lever pipe 30 below the upper end 2a of the main body case 2 and above the upper end 32a of the lever holder 32, the shape change portion 35 and other portions are housed in the main body case 2 and are invisible to a driver and others. This makes it possible to improve the stiffness of the lever pipe 30 in the shift direction (vehicle front-rear direction) Y while keeping a good appearance of the gearshift lever device 1, and the deformation of the lever pipe 30 can be suppressed.
(2) The lever pipe upper portion 33 is formed in the tube shape having the complete circle cross section, and the lever pipe lower portion 34 is formed in the tube shape having the oval cross section. The major axis direction of the oval of the lever pipe lower portion 34 is aligned with the shift direction Y of the gearshift lever 3.
   Such a configuration of the lever pipe 30 makes it possible to make the section modulus of the cross section along the shift direction Y of the lever pipe lower portion 34 greater than the section modulus of the cross section along the shift direction Y of the lever pipe upper portion 33.
(3) The through hole 36 is formed in the part of the lever pipe 30 below the upper end 2a of the main body case 2 and above the upper end 32a of the lever holder 32.

With the through hole 36 formed in the lever pipe 30, stress can be concentrated to the part of the lever pipe 30 around the through hole 36 when the predetermined amount or more of load (large load) P is inputted. This makes it possible to suppress the deformation of the lower part of the lever pipe 30 (lever pipe lower portion 34) when the large load P is inputted, and thus the separation between the lever pipe 30 and the lever holder 32 can be more reliably suppressed.

Although the gearshift lever device of the present invention is described taking the above-described embodiment as an example, it is not limited to the above-described embodiment, and various other embodiments can be employed without departing from the gist of the present invention.

## Claims

1. A gearshift lever device (1), comprising:
a main body case (2) fixed on a body of a vehicle; and
a gearshift lever (3) supported by the main body case (2) in a shiftable manner, wherein
the gearshift lever (3) includes a tubular lever pipe (30) and a lever holder (32) having an insertion hole (31) through which the lever pipe (30) is inserted,
the lever pipe (30) includes a lever pipe upper portion (33) forming an upper side of the lever pipe (30) and a lever pipe lower portion (34) forming a lower side of the lever pipe (30),
a section modulus of the lever pipe lower portion (34) is greater than a section modulus of the lever pipe upper portion (33), and
a shape of the lever pipe (30) is changed in a part below an upper end of the main body case (2) and above an upper end of the lever holder (32) such that the lever pipe upper portion (33) and the lever pipe lower portion (34) have different shapes.

2. The gearshift lever device (1) according to claim 1, wherein
the lever pipe upper portion (33) is formed in a tube shape having a complete circle cross section,
the lever pipe lower portion (34) is formed in a tube shape having an oval cross section, and
a major axis direction of the oval of the lever pipe lower portion (34) is aligned with a shift direction of the gearshift lever (3).

3. The gearshift lever device (1) according to claim 1 or 2, wherein
a through hole (36) is formed in a part of the lever pipe (30) below the upper end of the main body case (2) and above the upper end of the lever holder (32).
